# EUROPÄISCHE PATENTSCHRIFT

(11) **EP 3 343 085 B1**
(45) Veröffentlichungstag und Bekanntmachung des Hinweises auf die Patenterteilung: **01.05.2019**
(21) Anmeldenummer: 17150106.7
(22) Anmeldetag: 03.01.2017
(51) Int. Cl.: F16P 3/12, F16P 3/16

(54) **VORRICHTUNG ZUR BEWEGUNG UND ZUR ARRETIERUNG EINER TÜR**
DEVICE FOR MOVING AND FASTENING A DOOR
DISPOSITIF DE DÉPLACEMENT ET D'ARRÊT D'UNE PORTE

(43) Veröffentlichungstag der Anmeldung: 04.07.2018
(73) Patentinhaber: Strasser GmbH, 88250 Weingarten (DE)
(72) Erfinder: Strasser, Alexander Thomas, 88263 Horgenzell (DE)
(74) Vertreter: Engelhardt, Volker

(56) Entgegenhaltungen:
- EP-A1- 3 106 738
- EP-B1- 2 562 464
- DE-A1- 3 827 909
- US-A- 3 861 016

## Beschreibung

Die Erfindung bezieht sich auf eine Vorrichtung zur Bewegung und zur Arretierung einer Tür nach dem Oberbegriff des Patentanspruchs 1.

Eine solche Vorrichtung ist durch die EP 2562464 B1 bekannt geworden, durch die insbesondere der Gefahrenbereich einer Werkzeugmaschine während des Bearbeitungsvorganges gesichert ist, so dass der Gefahrenbereich während des Bearbeitungsvorganges der Werkzeugmaschine verschlossen ist. Solche Vorrichtungen dienen insbesondere als Schutzmaßnahmen, um Verletzungen bei dem Bedienungspersonal zu verhindern, um fremde Gegenstände den Eintritt in den Gefahrenbereich zu verwehren oder um Personen, die beispielsweise den Gefahrenbereich betreten wollen, vor Verletzungen zu schützen, wenn die Tür zugeht. Im Wesentlichen sollen die Schiebetüren zwar den Gefahrenbereich oder den Zutrittsbereich öffnen und verschließen, jedoch soll gleichzeitig gewährleistet sein, dass während der Zustellbewegung der Tür eine Gefahr oder ein Verklemmen bzw. Beschädigen der Tür oder des Gegenstandes ausgeschlossen ist. Die Verletzungsgefahr ist insbesondere durch die großen Bewegungsgeschwindigkeiten der Tür gegeben, die für kurze Bewegungszyklen erforderlich ist.

Derartige Vorrichtungen bestehen typischerweise aus zwei parallel und beabstandet zueinander angeordnete Profilschienen, durch die die Tür entlang eines Verstellweges durch eine Antriebseinrichtung verfahrbar gelagert ist. Um die Tür zu arretieren, weist die Vorrichtung ein Sperrglied auf, das entlang einer parallel zu den Profilschienen angeordneten Führungssäule bei dem Verstellen der Tür entlangfährt. An der Unterkante der Tür ist eine Kontaktleiste vorgesehen, die dazu dient, den Sperrmechanismus mit der Führungssäule zu verbinden, sobald ein Gegenstand in den Bewegungsbereich der Tür gelangt. Die Kontaktleiste ist betrieblich mit dem Sperrglied verbunden, und das Sperrglied ist mittels eines Federmechanismuses vorgespannt. Aktiviert die Kontaktleiste das Sperrglied, wird das Sperrglied durch den Federmechanismus mit der Führungssäule verkantet und die Tür ist arretiert. Um den Kraftfluss von der Antriebseinrichtung zu unterbrechen, ist zwischen der Antriebseinrichtung und der Tür eine Überlast- bzw. Rutschkupplung vorgesehen, durch die der Kraftfluss unterbrochen ist, so dass die Antriebskraft durch die Tür entkoppelt ist.

Solche Vorrichtungen zur Bewegung und zur Antriebseinrichtung von einer Tür als Schutzmaßnahme vor Gefahrenstellen, an einer Werkzeugmaschine, Schiebetüren im Eingangsbereich eines Fahrzeuges oder eines Gebäudes, haben sich in der Praxis äußerst bewährt. Nachteiliger Weise hat sich jedoch herausgestellt, dass zur Steuerung und Regelung der Tür die Antriebseinrichtung zwingend erforderlich ist und dass während der Stillstandszeit der Tür jedoch nicht festgestellt werden kann, ob die Kontaktleiste und das Sperrglied ausgelöst ist. Als ausschließliche Sicherheit dient zudem lediglich die mechanische Verbindung zwischen dem Sperrglied und der Führungssäule, sobald auf die Kontaktleiste während der Bewegung der Tür ein Hindernis auftrifft. Sollte das Sperrglied oder sonstige mechanische Bauteile defekt sein, dann ist ein Aufstoppen der Tür nicht möglich, so dass Verletzungsrisiken gegeben sind.

Der Erfindung liegt daher die Aufgabe zugrunde, eine Vorrichtung zur Bewegung und zur Arretierung einer Tür der vorgenannten Gattung derart weiterzubilden, dass während des Stillstehens der Tür, bspw. in einer halbgeschlossenen Stellung, eindeutig festzustellen ist, ob ein Gegenstand oder Hindernis die Kontaktleiste rührt, ohne dass das Sperrglied ausgelöst hat und dass zudem eine zusätzliche Sicherheitsabfragung vorhanden ist, wenn die mechanische Verbindung zwischen dem Sperrglied und der Führungssäule und/oder zwischen der Kontaktleiste und dem Sperrglied defekt sein sollte. Zudem sollen verschleißträchtige elektrische Leitungen entfallen, die die elektrischen Komponenten der beweglichen Bauteile mit den feststehenden Bestandteilen der Vorrichtung verbinden. Darüber hinaus soll die Vorrichtung robust gegen Verunreinigungen, beispielsweise durch viskose Medien, Staub oder dergleichen sein.

Diese Aufgabe ist erfindungsgemäß durch die Merkmale des kennzeichnen Teils von Patentanspruch 1 gelöst.

Weitere vorteilhafte Weiterbildungen der Erfindung ergeben sich aus den Unteransprüchen.

Dadurch, dass parallel zu den Führungsschienen ein von der Vorrichtung elektrisch isolierter Signalleiter angeordnet ist, dass bei der Aktivierung und dem Verschwenken des Sperrgliedes durch den Signalleiter ein elektrischer Kreis geschlossen ist und dass eine für die Antriebseinrichtung auswertbares elektrisches Signal generiert ist, kann die Antriebseinrichtung den Arretierungszustand der Tür erfassen, und zur sowohl weitgehend der Bewegung als auch weitgehend des Stillstehens der Tür, da der Bewegungszustand der Tür völlig unabhängig von der elektrischen Kontaktsituation ist. Ferner stellt die Generierung eines elektrischen Signals eine zusätzliche Sicherheit dar, durch die ein Abschalten der Antriebseinstellung erreicht ist, so dass die Tür während der Bewegung abgebremst werden kann, auch wenn die mechanische Verbindung zwischen den Kontaktsituationen, der Sperrglied und/oder der Führungssäule defekt sein sollte.

Darüber hinaus ist es besonders vorteilhaft, wenn die Führungssäule den Signalleiter bildet. Hierzu sind die Tür an der Führungssäule und die Führungssäule an der Vorrichtung elektrisch isoliert gelagert, und die Führungssäule ist mit der Antriebseinrichtung bzw. deren Steuerung elektrisch verbunden. Bei der Aktivierung und dem Verschwenken des Sperrgliedes ist ein elektrischer Kreis durch das Verkanten des Sperrgliedes an der Führungssäule geschlossen und ein für die Antriebseinrichtung auswertbares elektrisches Signal ist generiert. Das Schaltsignal kann hierzu mit einem oder mehreren Relais verknüpft sein, durch die die Antriebseinrichtung ausgeschaltet ist, ein elektrisches Abbremsen und/oder Feststellen der Antriebseinrichtung erzeugt ist. Die Vorrichtung bzw. die Tür entspricht im elektrischen Sinn der Masse bzw. dem Masseleiter, so dass durch das Sperrglied und der Führungssäule bei der Aktivierung ein Masseschluss entsteht.

Der Signalleiter kann weiterhin als ein Bandschalter ausgebildet sein, der parallel und beabstandet zu einer der Profilschienen oder der Führungssäule angeordnet ist. Der Bandschalter ist derart benachbart zu der Führungssäule und dem Auslösemechanismus der Tür angeordnet, dass dieser bei der Aktivierung und dem Verschwenken des Sperrgliedes mechanisch betätigt ist. Hierzu kann an dem Sperrglied bzw. an dem Aktivierungsmechanismus des Sperrgliedes oder ein auf sonstige Weise mit dem Sperrglied gekoppeltes Betätigungselement an der Tür angeordnet sein, das den Bandschalter mechanisch betätigt. Durch den Bandschalter ist bei der Betätigung ein elektrischer Kreis geschlossen und ein für die Antriebseinrichtung auswertbares elektrisches Signal generiert.

Des Weiteren ist es besonders vorteilhaft, wenn jeder Profilschiene eine als Signalleiter wirkende Führungssäule oder Bandschalter zugeordnet ist. Somit werden mehrere Schaltsignale generiert und eine Redundanz ist geschaffen. Die Schaltsignale können in Reihe oder parallel geschaltet und ausgewertet sein, so dass bei einer Fehlfunktion Rückschlüsse auf das fehlerverursachende Bauteil möglich sind. Die Abfrage, ob eine Auslösung der Kontaktleiste stattgefunden hat, kann erfindungsgemäß unmittelbar durch die Steuereinheit erfolgen, ohne dass der Betriebszustand der Kontaktleiste oder des Sperrglieds zu überwachen ist.

Ferner kann die Führungssäule mittels Dämpfer an dem Boden abgestützt sein. Zur Isolierung der an der Führungssäule geführten Bauteile können Kunststoffe oder Kunststoffgemische insbesondere Teflon, als elektrischer Isolator und Gleitlagerwerkstoff verwendet werden.

Zwischen der Antriebseinrichtung und der Tür kann eine Überlast- bzw. Rutschkupplung angeordnet sein, durch die die triebliche Verbindung zwischen der Antriebseinrichtung und der Tür getrennt werden kann.

Darüber hinaus kann an der Kontaktleiste ein Näherungsschalter angeordnet sein, der Gegenstände in dem Verstellweg der Tür und/oder bei einer drohenden Kollision erkennt und ein für die Antriebseinrichtung auswertbares Signal generiert, durch das die Tür abgebremst und festgestellt ist. Durch die Anordnung von mehreren Schaltkreisen an der Führungssäule kann schlicht und fehlerfrei festgestellt werden, ob das jetzige Sperrglied funktioniert hat bzw. ob dieses defekt ist um eine notwendige Reparatur durchzuführen.

In der Zeichnung sind zwei erfindungsgemäße Ausführungsbeispiele dargestellt, die nachstehend näher erläutert sind. Im Einzelnen zeigt:
- Figur 1: ein erstes Ausführungsbeispiel einer Vorrichtung mit einer Tür, die zwischen zwei Profilschienen an jeweils einer Führungssäule geführt verfahrbar gehalten ist und die Tür zur Aktivierung der Arretierung eine Kontaktleiste aufweist, die trieblich mit einem Sperrglied verbunden ist, in perspektivischer Darstellung,
- Figur 2: die Vorrichtung gemäß Figur 1 in vergrößerter Ansicht im Bereich des mit Federn vorgespannten Sperrgliedes,
- Figur 3a: einen Schaltkreis der Vorrichtung gemäß Figur 2,
- Figur 3b: eine Weiterbildung des Schaltkreises gemäß Figur 3a,
- Figur 4: ein zweites Ausführungsbeispiel einer Vorrichtung zum Arretieren einer verschiebbaren Tür mit einem parallel zu der Führungssäule angeordneten Bandschalter, der durch ein mit dem Sperrglied gekoppelten Betätigungselement zusammen wirkt,
- Figur 5: ein Schaltkreis der Vorrichtung gemäß Figur 4 und
- Figur 6: eine Weiterbildung der Vorrichtung gemäß Figur 1 oder Figur 4 mit einem Näherungsschalter an der Kontaktleiste der Tür.

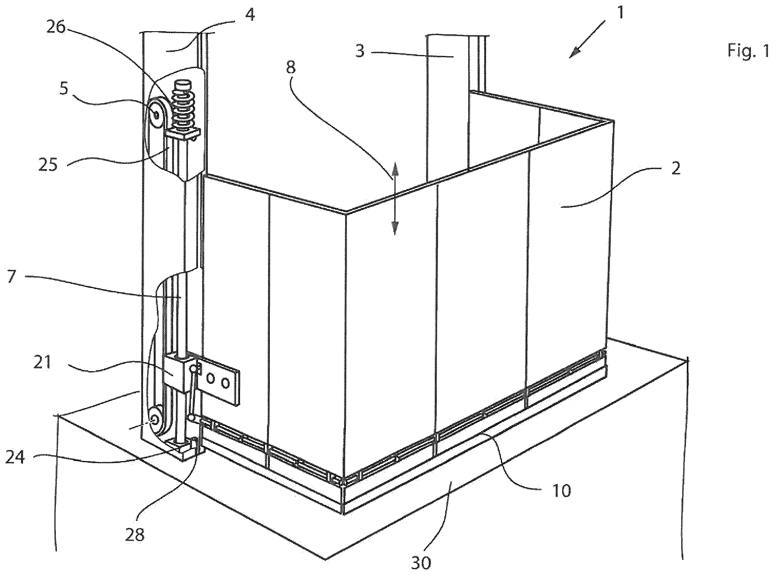

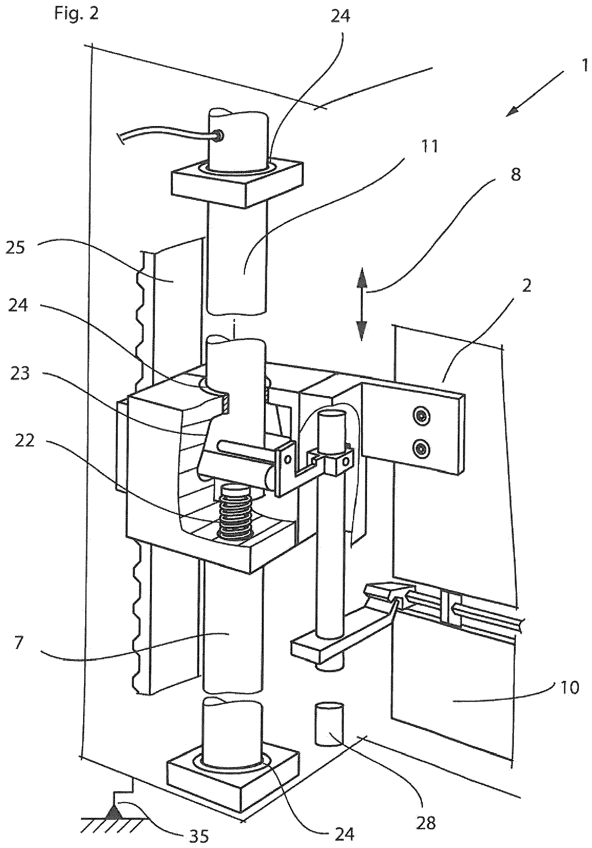

In den Figuren 1 und 2 ist eine Vorrichtung 1 zur Bewegung und zur Arretierung einer verschiebbaren Tür 2, durch die eine Gefahrenstelle abgesichert ist zu entnehmen. Die Tür 2 kann beispielsweise Bestandteil einer Schutzeinrichtung einer Werkzeugmaschine, einer Schiebetür für Fahrzeuge oder zur Raumteilung, an einem Förderband oder einer sonstigen maschinellen Anlage verwendet werden. Die Tür 2 bewegt sich in der mit der Bezugsziffer 8 gekennzeichneten vertikalen Bewegung-oder Verstellrichtung, um die Gefahrenstelle zu verschließen, so dass diese nicht zugänglich und insoweit geschützt ist. Die Tür 2 ist selbstverständlich auch in der horizontalen oder in einer geneigten Ebene bewegbar und kann aus einer Vielzahl von einzelnen Segmenten nach Art eines Rollladens ausgebildet sein und in gekrümmten Ebenen angewendet werden.

Um die Gefahrenstelle freizugeben bzw. abzusichern ist es erforderlich, die Tür 2 entlang der Verstellrichtung 8 anzuheben bzw. abzusenken. Zu diesem Zweck ist die Tür 2 in zwei C-oder U-förmig ausgestalteten Profilschienen 3, 4 verschiebbar gehalten, die parallel und beabstandet zueinander ausgerichtet sind. An einem Boden 30 der Vorrichtung 1 - bzw. an der Endposition, die dem abgesicherten Zustand des Gefahrenbereich entspricht - kann ein elektrischer oder mechanischer Endanschlag 28 angeordnet sein, durch den ein nachfolgend erläuterter Aktivierungsmechanismus ausgelöst ist oder ein elektrisches Signal generiert ist, durch das die Tür 2 abgebremst und arretiert ist.

Des Weiteren ist eine Antriebseinrichtung 5 beispielsweise in Form eines Elektromotors vorgesehen, durch die ein Keilriemen 25 angetrieben ist. Der Keilriemen 25 ist an einer vorgesehen Position mit der Tür 2 trieblich verbunden, so dass die Lateralbewegung der Antriebseinrichtung 5 in eine Transversalbewegung der Tür 2 gewandelt ist.

Falls während des Verschließvorganges der Tür 2 - also bei der Bewegung der Tür 2 in Verstellrichtung 8 - ein Bedienungspersonal oder ein Gegenstand 20 unsachgemäß in die Gefahrenstelle eingreift, könnte das Bedienungspersonal bzw. der Gegenstand 20 eingeklemmt bzw. verletzt oder beschädigt werden. Aus Sicherheitsgründen ist daher die Tür 2 unmittelbar zu stoppen, wenn diese während der Verstellbewegung auf ein Hindernis bzw. Gegenstand 20 trifft.

Zu diesem Zweck ist an der Unterkante der Tür 2 eine Kontaktleiste 10 angebracht, die linear nach oben oder nach außen verschwenkbar an der Tür 2 gelagert ist und trieblich mit einer Arretierungseinrichtung 21 gekoppelt ist.

Die Tür 2 bzw. die einzelnen Segmente der Tür 2 sind aus einem elektrisch leifähigen Material ganz oder teilweise gebildet. Hierzu kann die Tür 2 oder das jeweilige Segment der Tür 2 aus einen elektrisch leitfähigen Rahmen, beispielsweise aus Aluminium oder anderen möglichst leichtbaugerechten Werkstoffen oder Legierungen, hergestellt sein. Die Erdung der Tür 2, bzw. die elektrische Verbindung zu der Masse erfolgt beispielsweise durch eine geeignete Lagerung der Tür 2 an den Profilschienen 3, 4 mittels elektrisch leitfähigen Material.

Parallel und beabstandet zu den Profilschienen 3 und 4 ist eine Führungssäule 7 vorgesehen. Die Führungssäule 7 ist als ein Signalleiter 11 ausgebildet und galvanisch von der übrigen Vorrichtung 1 entkoppelt bzw. von dieser elektrisch isoliert und elektrisch mit der Antriebseinrichtung 5 bzw. deren Steuerung 40 verbunden. Die Führungssäule 7 kann darüber hinaus mit von ein oder mehreren Dämpfern 26 von der Vorrichtung 1 schwingungsmechanisch entkoppelt sein.

Die Tür 2 ist durch die Arretierungseinrichtung 21 an der Führungssäule 7 geführt und von dieser ebenfalls elektrisch isoliert. Hierzu ist zwischen der Arretierungseinrichtung 21 und der Führungssäule 7 mindestens ein Isolator 24 angeordnet. Der Isolator 24 ist als eine elektrisch isolierendes Gleitlager oder Muffe ausgebildet.

Die Arretierungseinrichtung 21 umgreift die Führungssäule 7 und besteht im Wesentlichen aus einem mit einer Feder 22 vorgespannten Sperrglied 6, das in einer Keilführung 23 angeordnet ist. In der Ausgangsposition ist die Tür 2 durch die Antriebseinrichtung 5 beliebig bewegbar und das Sperrglied 6 ist beabstandet von der Führungssäule 7 gehalten. Wird das Sperrglied 6 durch den Aktivierungsmechanismus freigegeben, ist das Sperrglied 6 durch die Feder 22 entlang der Keilführung 23 gegen die Führungssäule 7 verkantet und die Tür 2 ist arretiert. Bei der Kontaktierung des Sperrgliedes 6 mit der Führungssäule 7 entsteht eine elektrische Verbindung zwischen dem Sperrglied 6 und der Führungssäule 7 und ein elektrischer Kreis ist geschlossen.

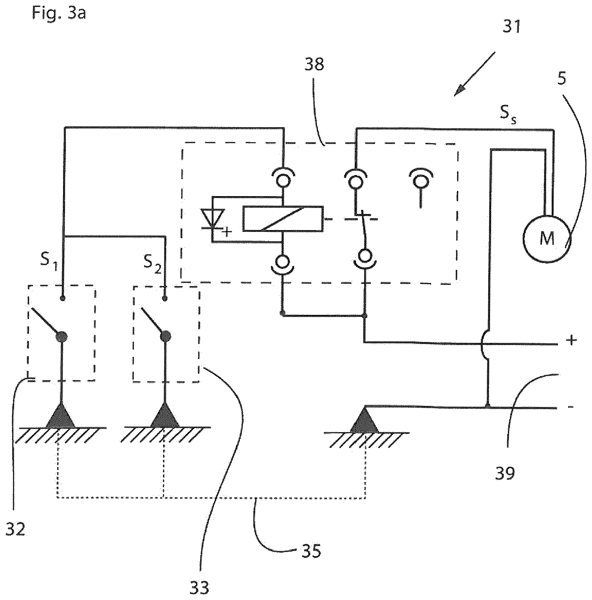

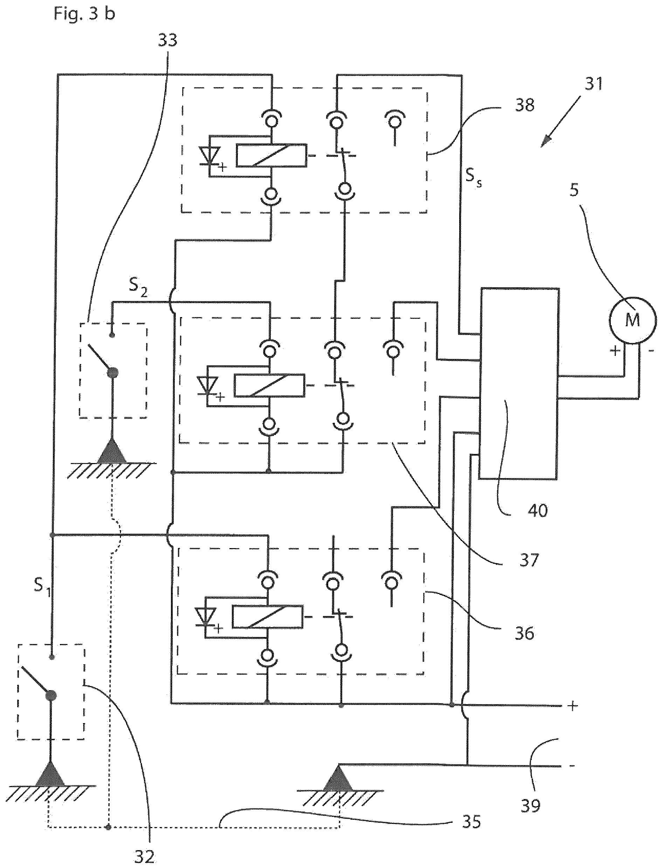

Insbesondere den in den Figuren 3a und 3b dargestellten elektrischen Schaltkreisen 31 ist zu entnehmen, dass der elektrische Schaltkreis 31 unter anderem aus der Masse bzw. dem Massenleiter 35 und aus der den Signalleiter 11 bildenden Führungssäule 7 gebildet ist. Der elektrische Minuspol - der speisenden Spannung einer Spannungsquelle 39 ist zugleich Masse.

Der Masseleiter 35 und der den Signalleiter 11 bildende Führungssäule 7 sind elektrisch mit der Antriebseinrichtung 6 bzw. mit deren Steuereinrichtung 40 verbunden. Der Masseleiter 35 bzw. die Masse liegt an der gesamten Vorrichtung 1 außer an der von der Vorrichtung 1 isoliert gelagerten Führungssäule 7 an. Dieser Teil der Vorrichtung 1 bildet somit den Masseleiter 35.

Der elektrische Schaltkreis ist durch einen Kurzschluss des Signalleiters 7 mit dem Sperrglied 6 nach Art eines elektrischen Schalters 32, 33 geschlossen und ein Schaltsignal S₁, S₂ ist generiert. Das Schaltsignal S₁, S₂ betätigt ein elektrisches Relais 38, durch das ein Stoppsignal S_{S} generiert ist bzw. die Antriebseinrichtung 5 von der Spannungsquelle 39 getrennt und somit ausgeschaltet ist. Diese Ausgestaltung des elektrischen Schaltkreises 31 hat den Vorteil, dass die Antriebseinheit 5 keine gesonderte elektrische Steuerung benötigt. Darüber hinaus kann das Stoppsignal S_{S} eine elektrische Steuerung 40 der Antriebseinrichtung 5 dazu veranlassen, dass die Antriebseinrichtung 5 auf eine geeignete Weise elektrisch abgebremst bzw. gestoppt wird.

Den beiden Profilschienen 3 und 4 ist jeweils eine der Führungssäule 7 mit einem dazugehörigen Sperrglied 6 zugeordnet, sodass zwei Schaltsignale S₁, S₂ bei der Aktivierung des Aktivierungsmechanismuses generiert sind. Diese Schaltsignale S₁, S₂ können gemeinsam an das Relais 38 weitergeleitet werden. Das Stoppsignal S_{S} ist folglich generiert, wenn einer der elektrischen Schalter 32, 33 betätigt ist oder beide elektrischen Schalter 32 und 33 betätigt sind.

Die Schaltsignale S₁, S₂ können darüber hinaus, dargestellt in Figur 3b, eigenständig jeweils mittels eines elektrischen Relais 36, 37 ausgewertet sein, so dass beispielsweise eine Fehlfunktion eines der Sperrglieder 6 diagnostizierbar ist. Hierzu ist jede der Signalleiter 11 bildenden Führungssäulen 7, die zusammen mit den Sperrglieder 6 einen elektrischen Schalter 32, 33 bilden, mit einem Relais 36, 37 elektrisch verbunden. Während die Relais 36, 37 hauptsächlich der Betriebsüberwachung dienen, generiert das Relais 38 das Stoppsignal S_{S}. Das Relais 38 bildet folglich das Stoppsignal S_{S} und trennt die Antriebseinrichtung 6 von der Spannungsquelle 39, wenn an dem Relais 37 das Schaltsignal S₂ anliegt und/oder an dem Signaleingang des Relais 38 das Schaltsignal S₁ anliegt.

Darüber hinaus können die durch den Masseschluss erzeugten Schaltsignale S₁, S₂ und in Folge derer das Stoppsignal S_{S} dazu genutzt werden, die Antriebseinrichtung 5 durch die Steuerung 40 elektrisch abzubremsen bzw. in den Stillstand zu setzen. Die Steuerung kann in Abhängigkeit von den Signalen der Relais 36, 37, 38 die Antriebseinrichtung 5 ansprechen. Ein Relais 38, das die Spannungsversorgung der Antriebseinrichtung von der Spannungsquelle 39 unterbricht ist folglich nicht zwingend.

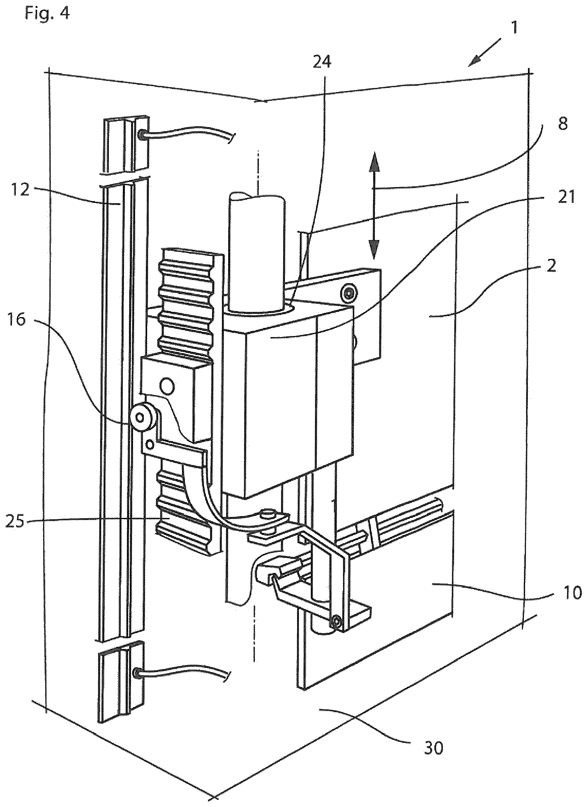

Insbesondere aus Figur 4 ist ersichtlich, dass der Signalleiter 11 auch als Bandschalter 12 ausgebildet sein kann. Der Bandschalter 12 schließt den elektrischen Kreis, wenn auf diesem in einem dafür vorgesehenen Bereich eine vorbestimmte mechanische Kraft ausgeübt wird.

Der Bandschalter 12 ist parallel und beabstandet zu der Führungssäule 7 bzw. zu der Profilschiene 3, 4 angeordnet und erstreckt sich entlang des gesamten Verfahrweges der Tür 2. An dem Aktivierungsmechanismus bzw. Sperrglied 6 ist ein Betätigungsarm 16 angeordnet, der bei der Aktivierung des Sperrgliedes 6 eine Schwenkbewegung vornimmt und den Bandschalter 12 vorgesehenen Bereich betätigt und somit das Schaltsignal S₁, S₂ generiert. Der Betätigungsarm 16 kann hierzu analog zu den Sperrgliedern 6 mittels einer Feder 22 vorgespannt sein. Auch können mehrere Bandschalter 12 zur Erzeugung von Redundanz in einer solchen Vorrichtung 1 verwendet werden.

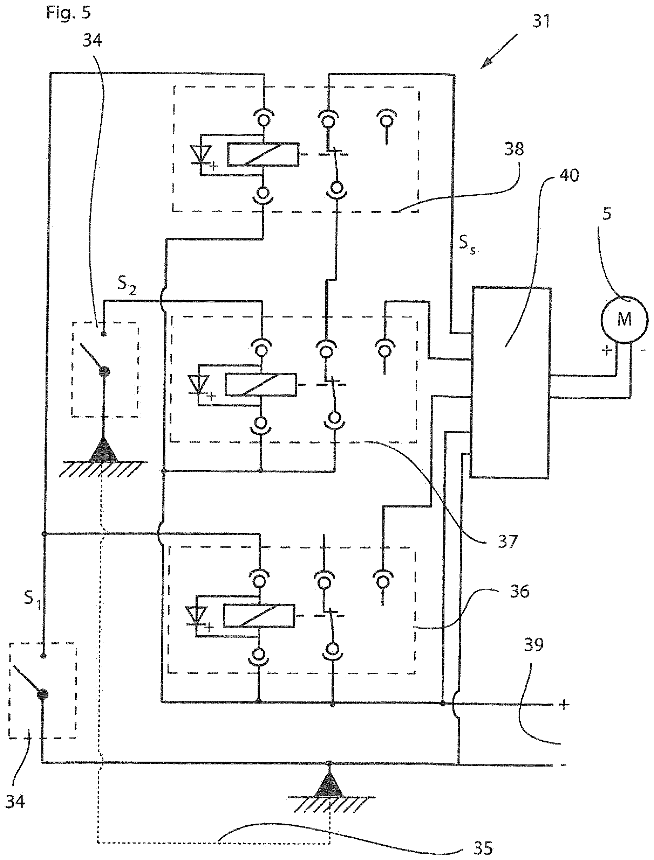

Der elektrische Schaltkreis 31 dieses zweiten Ausführungsbeispiels ist in Figur 5 dargestellt. Jeder Profilschiene 3, 4 bzw. jeder Führungssäule 7 ist ein Bandschalter 12 zugeordnet. Die Bandschalter 12 bilden jeweils einen elektrischen Schalter 32, 33, durch die die Schaltsignale S₁, S₂ bei der Betätigung generiert sind. Die Auswertung der Schaltsignale S₁, S₂ und die Generierung des Stoppsignals S_{S} durch das Relais 38 erfolgen analog zu dem in der Figur 3b beschriebenen elektrischen Schaltkreis 31.

Um darüber hinaus zusätzliche Redundanz und somit Zuverlässigkeit zu schaffen, können Schaltsignale S₁, S₂ mittels ein oder mehrere Signalleiter 11 in Form von Bandschaltern 12 und/oder Führungssäulen 7 erzeugt werden.

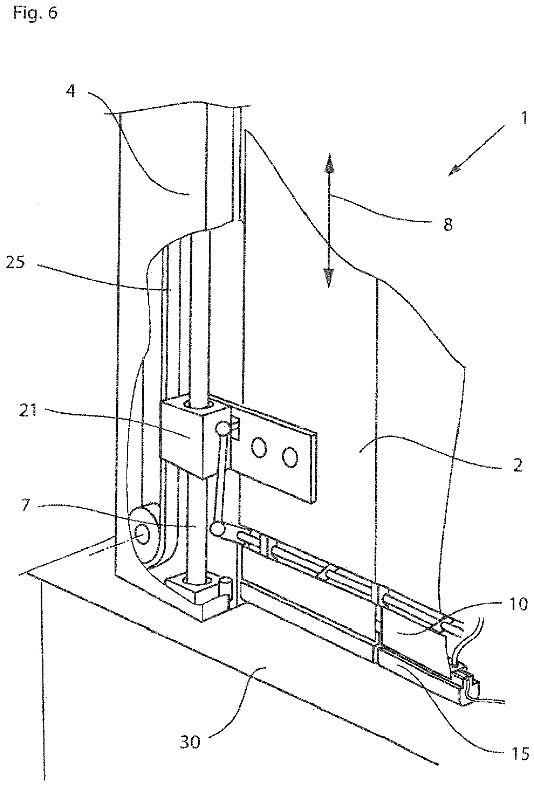

Der Figur 6 ist eine Weiterbildung der erfindungsgemäßen Vorrichtung 1 zu entnehmen wobei an der Kontaktleiste 10 ein elektrischer Näherungsschalter 15 angeordnet ist, der Gegenstände 20 bei dem Verfahren der Tür 2 erfasst und ein Schaltsignal S generiert, durch das die Antriebseinrichtung 5 gestoppt ist.

Die Vorrichtung 1 kann weiterhin über eine Vielzahl von Sensoren, insbesondere zur Bestimmung der Position der Tür 2, verfügen. Insbesondere Endschalter 28 zum Erfassen der Start- und Endposition, die das ordnungsgemäße Verschließen des Gefahrenbereiches sowie die Freigabe des Gefahrenbereiches erfassen, können in der Vorrichtung 1 implementiert sein. Deren Signale können durch die Steuerung 40 in geeigneter Weise ausgewertet werden.

## Patentansprüche

1. Vorrichtung (1) zur Bewegung und zur Arretierung einer verschiebbaren Tür (2), insbesondere einer vor einer zu sichernden Gefahrenstelle angeordneten Schutztür oder Einrichtung mit mindestens einer Profilschiene (3, 4), durch die die Tür (2) geführt gehalten ist, mit einer die Tür (2) verstellbaren Antriebseinrichtung (5), durch die die Tür (2) entlang einer Bewegungs- oder Verstellrichtung (8) bewegbar ist, mit einem an der Tür (2) angeordneten und begrenzt verschwenkbar gelagerten Sperrglied (6), das eine parallel zu den Profilschienen (3, 4) verlaufende Führungssäule (7) umgreift, und mit einer an der Unterkante der Tür (2) angeordneten Kontaktleiste (10), die trieblich mit dem Sperrglied (6) gekoppelt ist und durch die eine kraft- oder formschlüssige Wirkverbindung zur Arretierung der Tür (2) zwischen dem Sperrglied (6) und der Führungssäule (7) gebildet ist,
**dadurch gekennzeichnet,**
**dass** parallel zu den Führungsschienen (3, 4) ein von der Vorrichtung (1) elektrisch isolierter Signalleiter (11) angeordnet ist, dass durch den Signalleiter (11) bei der Aktivierung des Sperrgliedes (6) ein elektrischer Kreis geschlossen ist und dass ein für die Antriebseinrichtung (5) auswertbares elektrisches Signal (S₁, S₂, Sₛ) generiert ist.

2. Vorrichtung nach Anspruch 1,
**dadurch gekennzeichnet,**
**dass** die Führungssäule (7) von der Vorrichtung (1) und der Tür (2) elektrisch isoliert ist und dass die Führungssäule (7) als Signalleiter (11) bei der Aktivierung und dem Verschwenken des Sperrgliedes (6) einen elektrischen Kreis schließt.

3. Vorrichtung nach Anspruch 2,
**dadurch gekennzeichnet,**
**dass** die Tür (2) ganz oder teilweise aus elektrisch leitfähigen Werkstoffen gebildet ist und dass das Sperrglied (6) und die Tür (2) der elektrischen Masse zugeordnet ist.

4. Vorrichtung nach Anspruch 1,
**dadurch gekennzeichnet,**
**dass** der Signalleiter (11) als ein Bandschalter (12) ausgebildet ist und dass der Bandschalter (12) bei der Aktivierung und dem Verschwenken des Sperrgliedes (6) betätigt ist.

5. Vorrichtung nach einem der vorgenannten Ansprüche,
**dadurch gekennzeichnet,**
**dass** an der Tür (2) oder der Kontaktleiste (15) ein Näherungsschalter (15) angeordnet ist und dass der Näherungsschalter (15) Gegenstände (20) in der Verstellrichtung (8) der Tür (2) erfasst ist.

6. Vorrichtung nach einem der vorgenannten Ansprüche,
**dadurch gekennzeichnet,**
**dass** jeder Profilschiene (3 ,4) mindestens einer als Signalleiter (11) wirkende Führungssäule (7) und/oder mindestens ein Bandschalter (12) zugeordnet ist und dass bei der Aktivierung des Sperrgliedes (6) ein für die Antriebseinrichtung (5) mehrere auswertbare Signale (S₁, S₂, Sₛ) gebildet sind.

7. Vorrichtung nach einem der vorgenannten Ansprüche,
**dadurch gekennzeichnet,**
**dass** die Antriebseinrichtung (5) durch das Signal (S₁, S₂, Sₛ) von einer Spannungsquelle (39) getrennt ist oder von einer Steuerung (40) spannungsfrei geschaltet ist oder elektrisch abgebremst ist.

8. Vorrichtung nach einem der vorgenannten Ansprüche,
**dadurch gekennzeichnet,**
**dass** der Antriebseinrichtung (5) eine Überlast- bzw. Rutschkupplung zugeordnet ist, durch die der Kraftfluss zwischen der Antriebseinrichtung (5) und der Tür (2) zeitlich begrenzt getrennt ist.

9. Vorrichtung nach einem der vorgenannten Ansprüche,
**dadurch gekennzeichnet,**
**dass** die Führungssäule (7) mittels eines elastischen oder semielastischen isolierenden Werkstoffes, vorzugsweise aus Gummi, aus Kunststoff oder aus einem Kunststoffgemisch, dämpfend in der Vorrichtung (1) gelagert ist.

10. Vorrichtung nach einem der vorgenannten Ansprüche,
**dadurch gekennzeichnet,**
**dass** die Tür (2) an der Führungssäule (7) mittels eines isolierenden Werkstoffes, vorzugsweise aus einem Kunststoff oder aus einem Kunststoffgemisch, gelagert ist.

11. Vorrichtung nach einem der vorgenannten Ansprüche,
**dadurch gekennzeichnet,**
**dass** das Sperrglied (6) mittels einer oder mehreren Federn (22) vorgespannt ist und dass bei der Aktivierung des Sperrgliedes (6) schnappartig die kraft-oder formschlüssige Wirkverbindung zwischen dem Sperrglied (6) und der Führungssäule (7) entsteht.

## Claims

1. A device (1) for moving and fastening a movable door (2), especially a protective door or fitting located in front of a danger point to be protected, with at least one profile rail (3, 4) by means of which the door (2) is held in a guided arrangement, with an driving device (5) for adjusting the door (2) by means of which the door (2) can be moved along a movement or adjusting device (8), with a locking element (6) arranged on the door (2) swivelling in a restricted arc in which reaches around a guide column (7) running parallel to the profile rails (3, 4), and with a contact strip (10) arranged on the bottom edge of the door (2) that is in a driving connection with the locking element (6) and by means of which a non-positive or positive acting connection is created for locking the door (2) between the locking element (6) and the guide column (7),
**characterised in that**,
a signal conductor (11) electrically isolated from the device (1) is arranged in parallel to the guide rails (3, 4), that an electrical circuit is made by the signal conductor (11) when the locking element (6) is activated and that an electrical signal S₁, S₂, Sₛ) is generated which can be evaluated for the driving device (5).

2. The device in accordance with Claim 1,
**characterised in that**,
the guide column (7) is electrically isolated from the device (1) and from the door (2) and that the guide column (7) acting as a signal conductor (11) makes an electrical circuit when activated and when the locking element (6) swivels.

3. The device in accordance with Claim 2,
**characterised in that**,
the door (2) is made completely or partially of electrically conductive materials and that the locking element (6) and the door (2) are assigned to the electrical earth.

4. The device in accordance with Claim 1,
**characterised in that**,
the signal conductor (11) is configured as a bandswitch (12) and that the bandswitch (12) is actuated when the locking element (6) is actuated and swivels.

5. The device in accordance with one of the aforementioned claims,
**characterised in that**,
a proximity switch (15) is arranged on the door (2) or the contact strip (10) and that the proximity switch (15) detects objects (20) in the adjustment direction (8) of the door (2).

6. The device in accordance with one of the aforementioned claims,
**characterised in that**,
each profile rail (3, 4) is assigned to at least one guide column (7) acting as a signal conductor (11) and/or at least one bandswitch (12) and that several signals (S₁, S₂, Sₛ) which can be evaluated are created on activation of the locking element (6) for the driving device (5).

7. The device in accordance with one of the aforementioned claims,
**characterised in that**,
the driving device (5) is disconnected from a source of voltage (39) by the signal (S₁, S₂, Sₛ) or is switched to zero voltage or is electrically braked by a control unit (40).

8. The device in accordance with one of the aforementioned claims,
**characterised in that**,
the driving device (5) has an overload or slip clutch assigned to it, by means of which the powerflow between the driving device (5) and the door (2) is disconnected with a time limitation.

9. The device in accordance with one of the aforementioned claims,
**characterised in that**,
the guide column (7) is mounted in a cushioned arrangement in the device (1) by means of an elastic or semi-elastic insulating material, preferably made of rubber, plastic or of a polymer blend.

10. The device in accordance with one of the aforementioned claims,
**characterised in that**,
the door (2) is mounted on the guide column (7) by means of an insulating material, preferably made of a plastic or a polymer blend.

11. The device in accordance with one of the aforementioned claims,
**characterised in that**,
the locking element (6) is subjected to preload by one or more springs (22) and that when the locking element (6) is activated, the non-positive or positive acting connection between the locking element (6) and the guide column (7) is suddenly created.

## Revendications

1. Dispositif (1) servant au mouvement et au blocage d'une porte glissante (2), en particulier d'une porte de protection à monter devant un poste de travail ou devant un équipement qui doit être protégé, avec au moins une glissière profilée (3, 4) servant à retenir et à guider la porte (2), avec un équipement d'entraînement (5) déplaçant la porte (2) dans un sens de mouvement ou de réglage (8), avec un élément de barrage (6) prévu sur la porte (2) et pivotant dans certaines limites, qui enlace une colonne de guidage (7) s'étendant parallèlement aux glissières profilées (3, 4), et avec une réglette de contact (10) disposée sur le bord inférieur de la porte (2) et liée par entraînement avec l'élément de barrage (6) et qui assure une connexion par la force et la forme en vue du blocage de la porte (2) entre l'élément de barrage (6) et la colonne de guidage (7),
**caractérisé en ce que**
parallèlement aux glissières de guidage (3, 4), il est prévu un conducteur de signal (11) isolé électriquement du dispositif (1), qu'à l'activation de l'élément de barrage (6), le conducteur de signal (11) ferme un circuit électrique et qu'il est généré un signal électrique (S₁, S₂, Sₛ) utilisable pour l'équipement d'entraînement (5).

2. Dispositif (1) d'après la revendication 1,
**caractérisé en ce que**
la colonne de guidage (7) est isolée électriquement du dispositif (1) et de la porte (2) et que, en tant que conducteur de signal (11), la colonne de guidage (7) ferme un circuit électrique lors de l'activation et du pivotement de l'élément de barrage (6).

3. Dispositif (1) d'après la revendication 2,
**caractérisé en ce que**
la porte (2) est réalisée entièrement ou partiellement en matériaux conducteurs et que l'élément de barrage (6) et la porte (2) sont assignés à la masse électrique.

4. Dispositif (1) d'après la revendication 1,
**caractérisé en ce que**
le conducteur de signal (11) est conçu sous la forme d'un contacteur à bande (12) et que le contacteur à bande (12) est actionné lors de l'activation et du pivotement de l'élément de barrage (6).

5. Dispositif (1) d'après une des revendications précédentes,
**caractérisé en ce que**
sur la porte (2) ou sur la réglette de contact (10), il est arrangé un contacteur de proximité (15) et que le contacteur de proximité (15) saisit des objets se trouvant dans le dispositif de réglage (8) de la porte (2).

6. Dispositif (1) d'après une des revendications précédentes,
**caractérisé en ce que**,
à chaque glissière profilée (3, 4), il est assigné au moins une colonne de guidage (7) servant de conducteur de signal (11) et/ou au moins un contacteur à bande (12) et qu'à l'actionnement de l'élément de barrage (6), il est généré plusieurs signaux (S₁, S₂, Sₛ) utilisables pour l'équipement d'entraînement (5).

7. Dispositif (1) d'après une des revendications précédentes,
**caractérisé en ce que**
l'équipement d'entraînement (5) est séparé d'une source de tension (39) par le signal (S₁, S₂, Sₛ) ou qu'il est mis sans tension ou freiné électriquement par une commande (40).

8. Dispositif (1) d'après une des revendications précédentes,
**caractérisé en ce que**,
à l'équipement d'entraînement (5), il est attribué un accouplement de surcharge ou à friction qui assure que le flux de force entre l'équipement d'entraînement (5) et la porte (2) est séparé temporairement.

9. Dispositif (1) d'après une des revendications précédentes,
**caractérisé en ce que**
la colonne de guidage (7) est logée de manière amortie dans le dispositif (1) à l'aide d'un matériau élastique ou semi-élastique et isolant, de préférence du caoutchouc, de la matière plastique ou d'un mélange de matières plastiques.

10. Dispositif (1) d'après une des revendications précédentes,
**caractérisé en ce que**
la porte (2) est logée sur la colonne de guidage (7) à l'aide d'un matériau isolant, de préférence de la matière plastique ou d'un mélange de matières plastiques.

11. Dispositif (1) d'après une des revendications précédentes,
**caractérisé en ce que**
l'élément de barrage (6) est pré-tendu par un ou par plusieurs ressorts (22) et qu'à l'actionnement de l'élément de barrage (6) la liaison d'actionnement par la forme et la force entre l'élément de barrage (6) et la colonne de guidage (7) est formée brusquement à la manière d'un déclic.
